# FASCICULE DE BREVET EUROPEEN

(11) **EP 0 786 939 B1**
(45) Date de publication et mention de la délivrance du brevet: **07.01.1999**
(21) Numéro de dépôt: 95932040.9
(22) Date de dépôt: 22.09.1995
(51) Int. Cl.: A22C 17/00

(54) **MACHINE POUR LA FABRICATION AUTOMATIQUE DE BROCHETTES DE VIANDES ET/OU DE LEGUMES**
MASCHINE ZUR AUTOMATISCHEN HERSTELLUNG VON FLEISCH- UND/ODER GEMÜSE-SPIESSEN
AUTOMATIC MEAT AND/OR VEGETABLE KEBAB MAKING MACHINE

(30) Priorité: 17.10.1994 FR 9412774
(43) Date de publication de la demande: 06.08.1997
(73) Titulaire: Emsens, Michel, 42490 Fraisses (FR)
(72) Inventeur: Emsens, Michel, 42490 Fraisses (FR)
(74) Mandataire: Thivillier, Patrick
(86) Numéro de dépôt international: FR9501218
(87) Numéro de publication internationale: WO9611579

(56) Documents cités:
- EP-A- 0 078 232
- EP-A- 0 098 451
- EP-A- 0 278 879
- FR-A- 2 550 076
- FR-A- 2 642 939
- FR-A- 2 668 895
- FR-A- 2 675 343
- US-A- 3 835 761
- US-A- 4 842 181

## Description

L'invention se rattache au secteur technique des machines pour le traitement de produits alimentaires.

On a proposé pour la fabrication des brochettes, d'une manière industrielle, des machines permettant d'effectuer l'embrochement et la découpe d'une manière semi-automatique ou totalement automatique. on peut citer par exemple, à titre indicatif, nullement limitatif, l'enseignement des brevets FR 8316928 et 8517975.

Quelles que soient les solutions utilisées, le principe à la base de ces différentes techniques, résulte de l'utilisation d'un bac à l'intérieur duquel sont disposées, sous forme de tranches, les différentes couches de viande et de légumes. Les parois du bac présentent des fentes verticales pour le passage de lames de coupe.
Ces différentes solutions ont apporté un progrès important par rapport aux fabrications artisanales sur la conception des brochettes. Cependant, compte-tenu du principe mis en oeuvre dans ces machines, le choix des brochettes est nécessairement limité. En effet, il est possible d'utiliser seulement un certain type de viande et surtout un seul type de légumes constitués généralement par des poivrons étant donné qu'il est nécessaire de pouvoir disposer à plat et en tranches, les différents ingrédients à l'intérieur du bac. Les brochettes finies sont donc limitées dans leur composition.

En outre, ces brochettes présentent toujours le même aspect visuel, c'est-à-dire de forme générale parallèlépipédique.

Il apparait donc que cette technique d'embrochement automatique, ne permet pas de réaliser des brochettes que l'on peut être amené à faire manuellement et qui comprennent, au gré du consommateur, une pluralité d'ingrédients résultant de différents morceaux de viande et de légumes.

Le brevet US-A-3835761 décrit une machine pour la fabrication de brochettes au moyen d'empreintes, dans lesquelles sont positionnés des produits alimentaires qui sont ensuite soumis à une action d'embrochement pour réaliser une brochette. Toutefois, la solution proposée dans ce brevet n'est pas satisfaisante. En effet, cette machine met en oeuvre un tapis roulant sous forme de plaques articulées les unes aux autres, chaque plaque présentant des empreintes séparées recevant chacune un ingrédient. Il en résulte une limitation des produits à embrocher qui doivent être calibrés pour correspondre à l'empreinte considérée, étant donné qu'à chaque empreinte correspond un produit.
Par ailleurs, les espacements entre chacune des empreintes d'une même plaque, pour constituer une brochette, font qu'après embrochage, les ingrédients embrochés ne sont pas jointifs mais séparés d'un intervalle correspondant sensiblement à la séparation entre deux empreintes. La brochette obtenue a donc un mauvais aspect visuel.

On connaît également par le brevet FR 2550076 un appareil permettant de confectionner des brochettes. Cet appareil comprend un boitier avec couvercle, ledit boitier présentant un évidemment central contenant le produit à embrocher. L'évidemment est en communication avec deux guides piques destinés à assurer un bon centrage d'une tige métallique. Il est donc clair que ce brevet ne concerne pas une machine pour la fabrication automatique de brochettes de manière industrielle, mais concerne un appareil pour confectionner les brochettes de manière manuelle. Dans ce brevet, le problème de l'embrochement automatique en continu des produits contenus de l'empreinte ne se pose pas. Dans ce brevet le problème est d'éviter de se blesser lors de l'enfoncement de la pique qui du reste est métallique.

L'invention s'est fixée pour but de remédier à ces inconvénients, de manière simple, sûre, efficace et rationnelle.

Le problème que se propose de résoudre l'invention est de pouvoir automatiser la fabrication des brochettes incluant dans leur composition une combinaison quelconque de différents morceaux de viande et de légumes divers tels que tomates, champignons, poivrons, oignons, sans pour cela exclure d'autres ingrédients tels que pruneaux, ananas et, d'une manière générale, tous types d'ingrédients calibrés ou non calibrés.

Le problème posé est donc de réaliser de manière industrielle, des brochettes de type artisanal, en ayant pour objectif d'assurer automatiquement l'embrochement des morceaux de viande et autres légumes avec la possibilité d'utiliser des broches ou piques en bois notamment.

Pour résoudre un tel problème il a été conçu et mis au point une machine du type de celle comprenant des moyens supports présentant des empreintes aptes à recevoir des ingrédients, lesdits moyens coopérant avec au moins un système d'embrochement apte à engager une broche ou pique dans chacune des empreintes en traversant d'une manière concomitante, les ingrédients sous forme de morceaux de viande, et/ou de légumes et/ou de fruits pour réaliser une brochette.

Selon l'invention, la machine est remarquable par la combinaison des dispositions :
- le système d' embrochement comprend essentiellement un tube, des moyens pour introduire une pique dans le tube, des moyens pour déplacer en translation l'ensemble de la pique et des tubes pour leur enfoncement dans les morceaux de viande et/ou de légumes positionnés dans l'empreinte, des moyens pour enfoncer la pique par rapport au tube, en vue de son débordement, des moyens pour retirer le tube de sorte que seule la pique reste enfoncée dans les morceaux de viande et/ou de légumes;
- chaque empreinte a une forme générale rectangulaire délimitant un volume apte à être garni en totalité des ingrédients, les dimensions de ladite empreinte correspondent sensiblement aux dimensions de la brochette que l'on souhaite obtenir, l'empreinte communiquant à chacune de ses extrémités, avec des évidements débouchants pour l'engagement du tube recevant la pique.

Pour résoudre le problème posé d'assurer le maintien des éléments constitutifs de la brochette, pendant l'opération d'embrochement, chaque empreinte coopère, au moment de l'embrochement, avec une contre-forme d'appui apte à assurer un effort de pression sur les morceaux de viande et/ou de légumes.

Suivant une autre caractéristique, chaque empreinte présente des organes d'éjection de la brochette.

Pour résoudre le problème posé de réaliser en continu les brochettes, les moyens support sont constitués par des plaques accouplées entre elles et assujetties à des organes de commande et de transfert pour être amenées successivement pas à pas en regard du ou des postes d'embrochement, chacune des plaque présentant au moins une empreinte.

Avantageusement, les moyens d'introduction de la pique dans le tube sont constitués par un ensemble mobile de poussée assujetti à des vérins , les moyens mobiles pour déplacer en translation l'ensemble pique - tube étant constitué par un deuxième ensemble mobile susceptible d'être déplacé par le premier ensemble, lequel présente un doigt apte à assurer en position de butée des deux ensembles, correspondant à l'enfoncement de l'ensemble pique -tube, dans les morceaux de viande et/ou de légumes, à partir de l'une des extrémités de l'empreinte, le déplacement de la pique par rapport au tube, en vue de son débordement au niveau de l'autre extrémité de l'empreinte, lesdits ensembles étant ensuite ramenés successivement en position initiale..

Pour résoudre le problème posé de réaliser en continu les brochettes, les moyens supports sont constitués par des plaques accouplées entre elles et assujetties à des organes de commande et de transfert pour être amenées successivement pas à pas en regard du ou des postes d'embrochement, chacune des plaques présentant au moins une empreinte .

Toujours en ayant pour objectif d'automatiser l'ensemble des opérations, les piques sont stockées dans un magasin équipé d'un système de sélection apte à distribuer unitairement une pique en vue de son positionnement dans un berceau d'appui horizontal située entre les deux ensembles.

Pour résoudre le problème posé d'assurer automatiquement l'éjection des brochettes, à la sortie du ou des systèmes d'embrochement, les organes d'éjection sont constitués par un fer profilé logé dans le fond de l'empreinte avec capacité de déplacement en hauteur, ledit fer coopérant, à la sortie du poste d'embrochement, avec un organe apte à assurer son soulèvement pour assurer l'éjection concomitante de la brochette.

L'invention est exposée, ci-après plus en détail à l'aide des dessins annexés, dans lesquels :
La figure 1 est une vue en perspective à caractère schématique, montrant une configuration possible d'implantation, d'une installation pour la réalisation de brochettes selon les caractéristiques de l'invention.

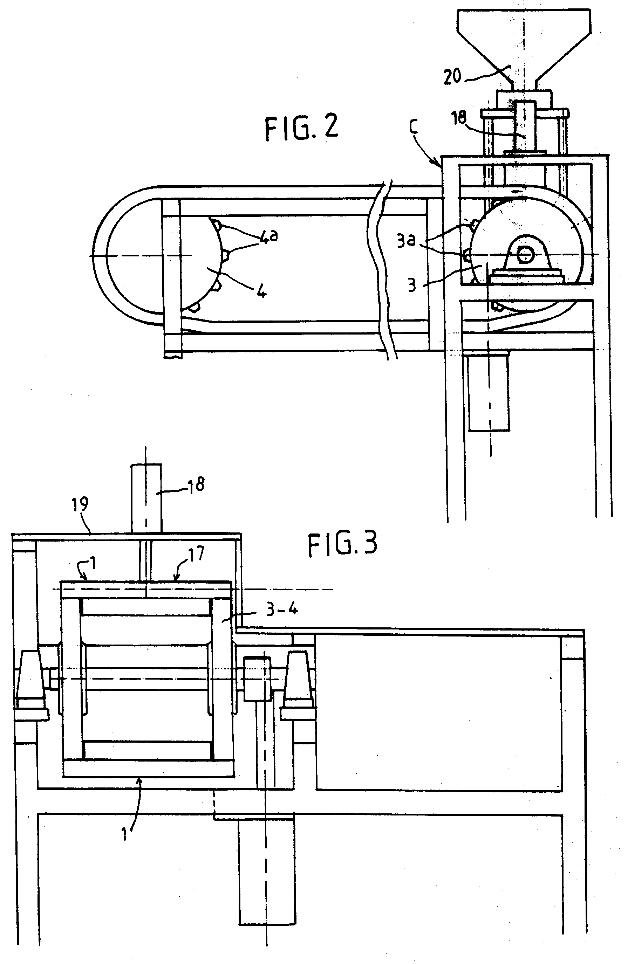

La figure 2 est une vue en coupe longitudinale de la machine.
La figure 3 est une vue en coupe transversale considérée selon la ligne 3.3 de la figure 2.
La figure 4 est une vue montrant le détail du poste de compression.
La figure 5 est une vue montrant le détail du système d'éjection.
La figure 6 est une vue en plan au niveau du poste d'embrochement.
La figure 7 est une vue en coupe selon la ligne 7.7 de la figure 6.
La figure 8 est une vue en coupe selon la ligne 8.8 de la figure 7.
Les figures 9 à 14 sont des vues en plan et à caractère schématique, montrant le principe d'embrochement selon l'invention.
La figure 15 est une vue en plan d'une plaque montrant, avant éjection, la brochette exécutée selon les caractéristiques de l'invention.

Selon l'invention, la machine comprend une pluralité de plaques (1), présentant chacune au moins une empreinte (1a) destinée à être garnie des ingrédients souhaités (morceaux de viande, de légumes, de fruits...), pour la réalisation de la brochette. Les plaques sont assujetties à tout moyen de commande et de transfert pour être amenées successivement pas à pas, en regard d'au moins un poste d'embrochement.
Par exemple, les plaques (1) sont conformées pour être articulées les unes par rapport aux autres et coopèrent avec des tambours d'entraînement (3) et (4) de manière à constituer une chaîne de transfert sans fin. Les tambours d'entraînement (3) et (4) peuvent présenter des doigts (3a) (4a) coopérant avec des trous complémentaires formés à proximité des bords de chacune des plaques.

Chaque empreinte (1a) a une forme générale rectangulaire, dont les dimensions, longueur, largeur et profondeur, correspondent très sensiblement aux dimensions de la brochette que l'on souhaite obtenir. Cette empreinte (1a) communique, à chacune de ses extrémités, avec des dégagements débouchants (1b) (1c), formés dans l'épaisseur de la plaque (1) et en alignement coaxial avec la partie médiane de l'empreinte (1a).
Comme il sera indiqué dans la suite de la description, ces dégagements (1b) (1c) permettent l'introduction des piques (P), avec leurs moyens d'embrochement.

Le système d'embrochement s'effectue pour l'essentiel, au moyen d'un tube creux (5) destiné à recevoir une pique (P). Dans ce but, le système d'embrochement est équipé de moyens d'introduction de la pique (P) dans le tube, ainsi que de moyens pour déplacer en translation l'ensemble de la pique et du tube, pour leur enfoncement dans les différents morceaux de viande et/ou de légumes, positionnés dans l'empreinte (1a) d'une plaque (1).

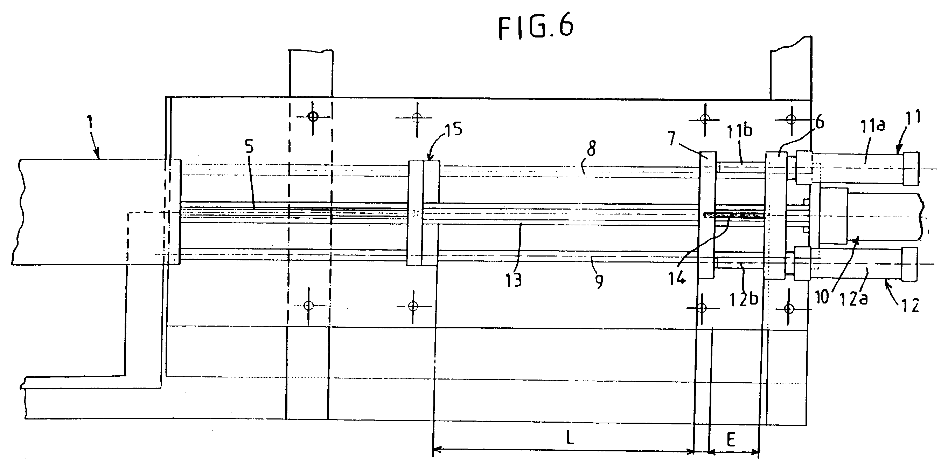

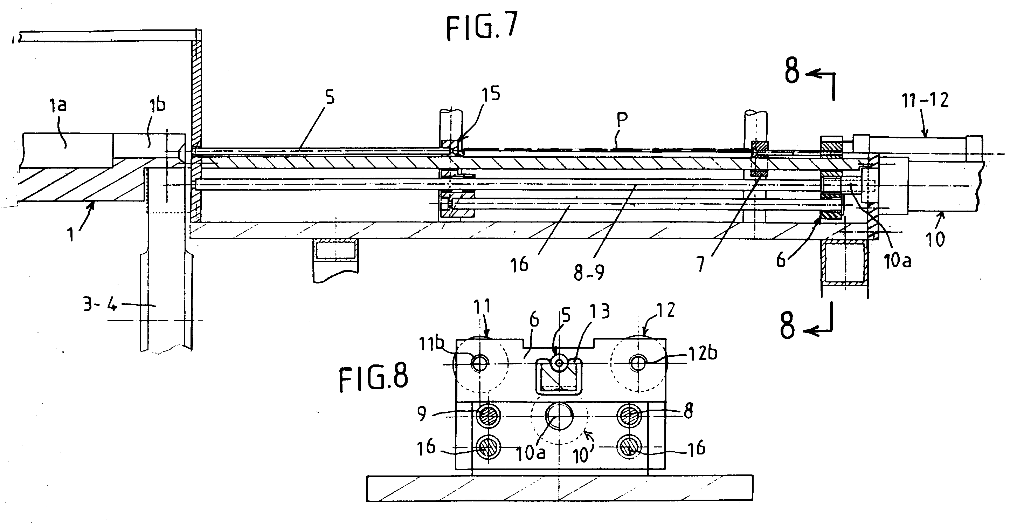

Plus particulièrement et comme le montrent les figures 6, 7 et 8, ces moyens d'introduction et d'embrochement sont constitués par un premier ensemble mobile de poussée, assujetti à des vérins. Cet ensemble mobile comprend deux plaques (6) (7) déplaçables par rapport à un berceau support fixe (13) recevant la pique (P). La plaque (6) est accouplée à la tige (10a) d'un vérin coaxial (10). Cette plaque (6) est par ailleurs accouplée aux fûts (11a) et (12a) de deux vérins (11) et (12), dont les tiges (11b) et (12b) sont accouplées à la plaque (7) et traversent librement la plaque (6). Les plaques (6) et (7) sont parallèles et espacées d'un écartement déterminé (E). Il apparait donc que les plaques (6) et (7) sont liées entre elles, par l'intermédiaire des vérins (11) et (12). La plaque (6) est montée avec capacité de coulissement sur des tiges de guidage parallèle (8) (9).
Par ailleurs, cette plaque (6) est solidaire d'un doigt coaxial (14) disposé en alignement avec le berceau support (13), pour être disposée en regard de la pique (P). Le doigt (14) traverse librement la plaque (7).

Le tube (5) est accouplé à un deuxième ensemble mobile, constitué essentiellement par une plaque (15) montée avec capacité de libre coulissement le long des tiges de guidage parallèles (8) (9). Cette plaque (15) est distante de la plaque (7), d'une longueur (L) correspondant très sensiblement à la longueur d'une pique. Cet entretoisement (L) est obtenu notamment, par une barre (16) solidaire de la plaque (15) et montée avec capacité de coulissement à la base de la plaque (7).
Le tube (5) est positionné en alignement coaxial avec les passages libres (1b) et (1c) des empreintes (1a) de chacune des plaques (1).

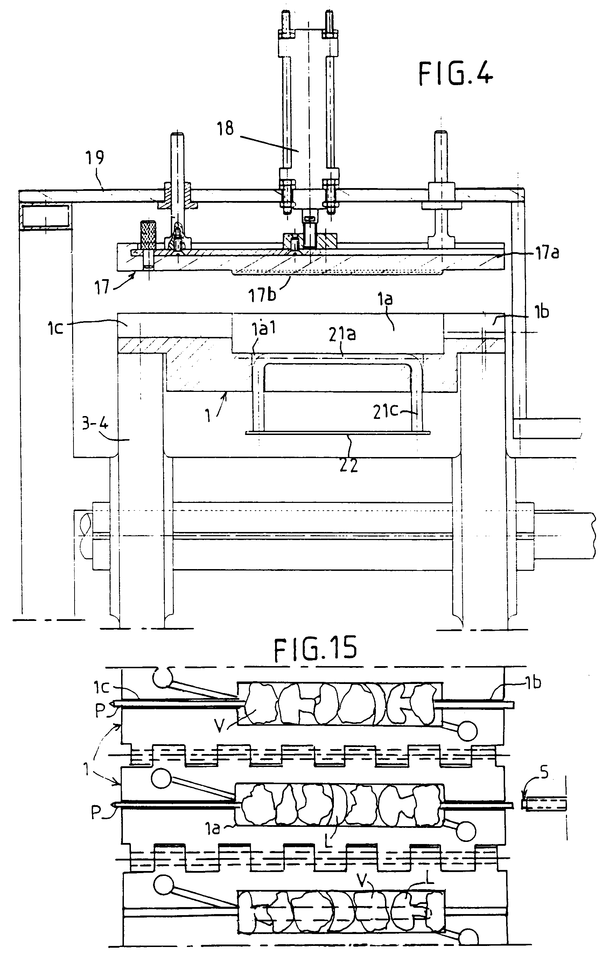

Suivant une autre caractéristique de l'invention, la machine est équipée, au niveau et en combinaison avec le système d'embrochement, d'un poste apte à assurer un effort de pression sur les morceaux de viande et/ou de légumes contenus dans l'empreinte, pendant l'embrochement (figure 4). Dans ce but, chaque empreinte (1e) est susceptible de coopérer, pendant la phase d'embrochement, avec un organe d'appui (17), fonctionnant à la façon d'une presse. Cet organe d'appui (17) peut être constitué par un plateau (17a) assujetti à un vérin de commande (18) monté sur un bâti support (19). Le plateau (17a) présente une empreinte en relief (17b) de forme complémentaire à celle de l'empreinte (1a) et dont l'épaisseur est déterminée pour exercer un faible effort de pression sur les morceaux de viande et/ou de légumes contenus dans l'empreinte (1a).
A noter que la mise en place d'une pique (P) dans le berceau support (13) s'effectue avantageusement par tout moyen de distribution et de sélection automatique, désigné dans son ensemble par (20).

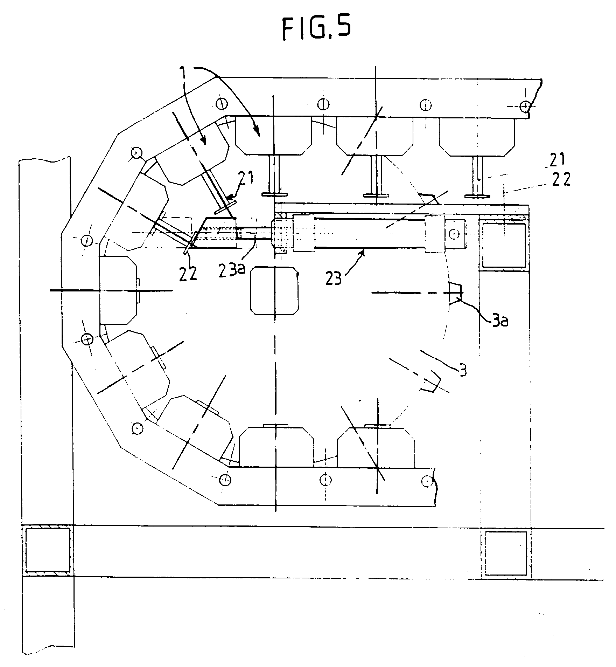

Suivant une autre caractéristique de l'invention, chaque empreinte (1a) coopère avec des organes d'éjection de la brochette.
Comme le montrent notamment les figures 4 et 5, les organes d'éjection sont constitués par un fer profilé (21) sous forme d'un U renversé, présentant une branche médiane (21a) et, dans un plan perpendiculaire, deux branches latérales (21b) (21c). Le fer (21) coopère très sensiblement avec la partie médiane de l'empreinte (1a). Les deux branches (21b) et (21c) sont engagées à libre coulissement dans l'épaisseur du fond de l'empreinte (1a), tandis que la branche médiane (21a) est logée dans une rainure (1a1) formée dans le fond de l'empreinte (1a).
L'extrémité libre des branches (21b) et (21c) est reliée par un méplat d'appui (22). Cet organe d'éjection (21), à la sortie du poste d'embrochement, peut être soumis à l'action d'un vérin de poussée (23) dont l'extrémité de la tige (23a) est agencée en (23b) pour agir sur le méplat (22), en vue de soulever le fer (21), pour provoquer, de manière concomitante, l'éjection de la brochette en dehors de l'empreinte (1a).
Avantageusement, le vérin poussoir (23) est disposé sur une partie appropriée de la machine, de manière à agir sur les organes d'éjection (21) lorsque les plaques (1) sont au début de phase descendante, par rapport aux tambours d'entrainement (3) (4), afin de permettre l'évacuation par gravité de la brochette au niveau d'un poste adapté en conséquence.

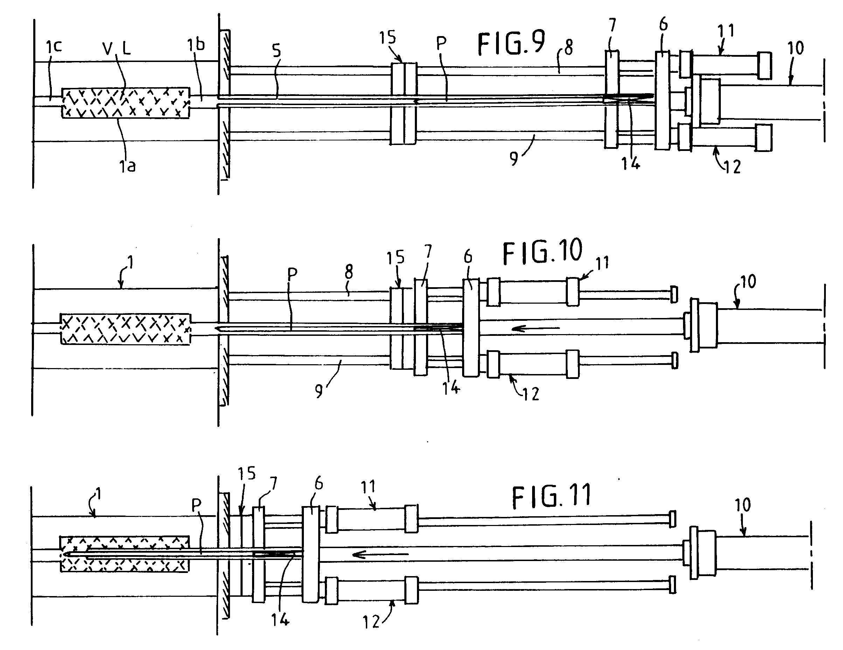

Il convient d'analyser le fonctionnement de la machine, en se réfèrant aux figures 9 à 14.

Les différents morceaux de viande pré-calibrés (V) et de légumes (L) sont disposés en juxtaposition dans chacune des empreintes (1a) des plaques (1), de manière à les garnir en totalité.
On rappelle, compte-tenu des caractéristiques spécifiques de la machine, qu'il est possible de remplir le volume de chacune des empreintes, par tous ingrédients au choix de l'utilisateur. Il est par exemple possible d'y introduire tous types de morceaux de viande calibrés (V), tous types de morceaux de légumes (L), tels que champignons, tomates, oignons, et éventuellement tous types de fruits. Sous l'effet du défilement des plaques (1) entrainées pas à pas par les tambours (3) et (4), ces dernières sont amenées successivement en regard du ou des postes d'embrochement.
Ainsi, une plaque (1) est arrêtée et positionnée au niveau du tube d'embrochement (5), en alignement coaxial avec les dégagements d'introduction (1b) et (1c) (figure 9).
L'organe presseur (17) est actionné par le vérin (18), pour venir en appui sur la plaque correspondante (1), et par conséquent, exercer un faible effort de pression sur les morceaux de viande (V) et de légumes (L), sous l'effet de l'engagement de l'empreinte en relief (17b) dans l'empreinte (1a).
Le vérin (10) est actionné pour déplacer, par sa tige (10a), le premier ensemble mobile constitué notamment par les plaques (6) et (7), le long des tiges de guidage (8) et (9). Ce déplacement a pour effet, au moyen de la plaque (7), d'introduire la pique (P), préalablement positionnée dans son berceau support (13), dans le tube (5) (figure 10).
Lorsque la plaque (7) arrive en contact avec la plaque (15), cette dernière est déplacée le long des tiges (8) et (9), ce qui a pour effet, de manière concomitante, de provoquer l'introduction de l'ensemble du tube (5) et de la pique (P) dans le passage (1b) et par conséquent, l'embrochement des différents morceaux de viande et/ou de légumes (figure 11).

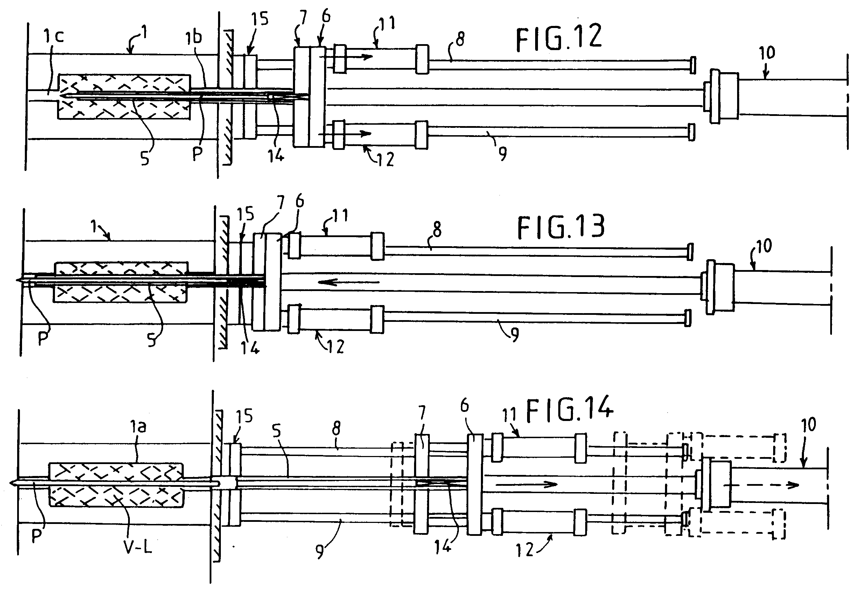

En position de butée de la plaque (15), les vérins (11) et (12) sont actionnés, ce qui a pour effet de provoquer le retrait de la plaque (7), accouplée aux tiges (11a) et (12a) desdits vérins (11) et (12), jusqu'à ce que cette plaque (7) vienne en butée contre la plaque (6). Il en résulte le débordement du doigt (14) engagé librement dans la plaque (7) (figure 12). Dans cette position, l'effet de poussée du vérin (10) aura pour effet, par sa tige (10a), de pousser l'ensemble des deux plaques (7) (6) et par conséquent le doigt (14), d'une distance correspondant sensiblement à l'écartement initial (E) entre les deux plaques (6) et (7). Le doigt (14) pénètre dans le tube (5), afin d'assurer le déplacement de la pique par rapport au tube (5) qui demeure fixe, en vue de son débordement dans l'ouverture de passage (1c) de l'empreinte (1a) (figure 13).
A ce stade, l'embrochement est terminé. Il suffit ensuite d'agir en sens inverse sur le vérin (10), pour provoquer, dans un premier temps, le retour des plaques (7) et (6), puis de la plaque (15) (figure 14).

Le vérin (18) de l'organe presseur est actionné en sens inverse, pour dégager l'empreinte (1a) et libérer par conséquent la brochette.

Cette opération d'embrochement est répétée successivement pour chaque plaque (1). Après embrochement, les plaques (1) sont déplacées linéairement, jusqu'au moment où l'organe éjecteur (21) de l'une des plaques arrive au niveau du vérin (23), lequel est alors actionné pour provoquer, par sa tige (23a), le soulèvement de l'organe (21), qui agit sur le fer (22). La branche (21a) de cet organe provoque le soulèvement de l'ensemble de la brochette et son éjection par gravité, sur un autre tapis de transfert ou par exemple, directement dans une barquette.

Bien évidemment, les différents organes de commande, notamment du déplacement pas à pas des plaques (1), du dispositif d'embrochement, de l'organe presseur et du système d'éjection, sont assujettis à tous systèmes de commande pour fonctionner en synchronisme d'une manière continue.

Afin d'augmenter la cadence de production, on prévoit de doubler au moins le poste d'embrochement. A noter qu'il est possible d'utiliser des piques en bois ou des piques en métal. Les différentes plaques (1) sont amovibles, et peuvent présenter des empreintes (1a) de dimensions adaptées au type de brochettes à obtenir. Il en est de même en ce qui concerne l'organe presseur dont la plaque d'appui (17a) est amovible, l'empreinte en relief (17b) étant également adaptée aux dimensions de l'empreinte (1a) correspondante.

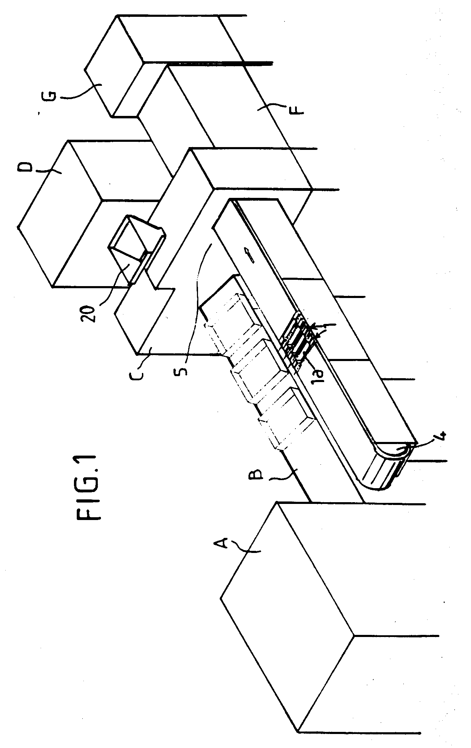

La figure 1 montre un exemple d'implantation de la machine selon l'invention, avec d'autres ensembles, afin de créer une ligne automatique de fabrication de brochettes. Le bloc (A) symbolise une machine apte à découper différents morceaux de viande de manière calibrée. Le repère (B) désigne un convoyeur sur lequel peuvent être disposées des barquettes remplies de morceaux de viande et de légumes. Ce convoyeur est avantageusement disposé à côté de la chaîne de transfert constitué par l'accouplement des plaques (1).
Le repère (C) désigne le bâti de la machine, intégrant le dispositif d'embrochement tel que défini précédemment. Le repère (C1) désigne le chargeur de piques, tandis que le repère (D) désigne un ensemble apte à assurer la distribution automatique de piques au niveau du berceau support (13).

De même, en alignement avec la chaîne de transfert constituée par l'accouplement des plaques (1), et au niveau de l'éjection des brochettes, peut être disposé un ensemble (F) conformé pour la mise en barquettes automatique. Cet ensemble (F) peut lui même être suivi d'un ensemble (G), constituant une filmeuse.

Les avantages ressortent bien de la description, en particulier on souligne et on rappelle :
- la possibilité d'obtenir d'une manière industrielle, des brochettes incluant tous types d'ingrédients afin de constituer une brochette du type de celles réalisées d'une manière artisanale,
- la possibilité d'employer des piques en bois ou en métal,
- les nombreux types de brochettes possible à obtenir.

## Revendications

1. Machine pour la fabrication automatique de brochettes comprenant des moyens support (1) présentant des empreintes (1a) aptes à recevoir des ingrédients, lesdits moyens coopérant avec au moins un système d'embrochement (5) apte à engager une broche ou pique dans chacune des empreintes (1a) en traversant, d'une manière concomitante, les ingrédients sous forme de morceaux de viande, et/ou de légumes et/ou de fruits, pour réaliser une brochette, **caractérisée en ce que** :
- le système d'embrochement comprend essentiellement un tube (5), des moyens (6) (7) pour introduire une pique (P) dans le tube (5), des moyens (15) pour déplacer en translation l'ensemble de la pique et des tubes pour leur enfoncement dans les morceaux de viande et/ou de légumes positionnés dans l'empreinte, des moyens pour enfoncer la pique par rapport au tube (5), en vue de son débordement, des moyens pour retirer le tube de sorte que seule la pique reste enfoncée dans les morceaux de viande et/ou de légumes.
- chaque empreinte (1a) à une forme générale rectangulaire délimitant un volume apte à être garni en totalité des ingrédients, les dimensions de ladite empreinte correspondent sensiblement aux dimensions de la brochette que l'on souhaite obtenir, l'empreinte (1a) communiquant, à chacune de ses extrémités, avec des évidements débouchants (1b) (1c) pour l'engagement du tube (5) recevant la pique (P).

2. Machine selon la revendication 1, caractérisée en ce que les moyens d'introduction de la pique dans le tube (5) sont constitués par un ensemble mobile de poussée (6) (7) assujetti à des vérins (10) (11) (12), les moyens pour déplacer en translation l'ensemble pique - tube étant constitué par un deuxième ensemle mobile (15) susceptible d'être déplacé par le premier ensemble, lequel présente un doigt (14) apte à assurer, en position de butée des deux ensembles, correspondant à l'enfoncement de l'ensemble pique - tube, dans les morceaux de viande et/ou de légumes, à partir de l'une des extrémités de l'empreinte, le déplacement de la pique par rapport au tube (5), en vue de son débordement au niveau de l'autre extrémité de l'empreinte, lesdits ensembles étant ensuite ramenés successivement en position initiale.

3. Machine selon la revendication 2, caractérisée en ce que le premier ensemble mobile comprend deux plaques (6) (7) déplaçables par rapport à un berceau support fixe (13) recevant la pique (P), la plaque (6) étant accouplée à la tige (10a) d'un vérin coaxial (10) et aux fûts (11a) et (12a) de deux vérins (11) et (12), dont les tiges (11b) et (12b) sont accouplées à la plaque (7) et traversent librement la plaque (6) qui est montée avec capacité de coulissement sur des tiges de guidage parallèle (8) (9) et est solidaire du doigt coaxial (14) disposé en alignement avec le berceau support (13), pour être disposée en regard de la pique (P) ; le tube (5) est accouplé à une plaque (15) montée avec capacité de libre coulissement le long des tiges de guidage parallèles (8) (9), cette plaque (15) étant distante de la plaque (7), d'une longueur (L) correspondant très sensiblement à la longueur d'une pique (P).

4. Machine selon la revendication 2, caractérisée en ce que les différents moyens constitutifs des systèmes d'entrainement sont disposés dans un plan horizontal correspondant à celui des empreintes, les deux ensembles (6) (7) et (15) étant séparés d'une distance très sensiblement égale à la longueur d'une pique.

5. Machine selon la revendication 1, caractérisée en ce que chaque empreinte (1a) coopère, au moment de l'embrochement, avec une contre-forme d'appui (17) apte à assurer un effort de pression sur les morceaux de viande et/ou de légumes et/ou de fruits.

6. Machine selon la revendication 1, caractérisée en ce que chaque empreinte présente des organes d'éjection (21) de la brochette.

7. Machine selon la revendication 1, caractérisée en ce que les moyens support sont constitués par des plaques (1) accouplées entre elles et assujetties à des organes de commande et de transfert pour être amenées successivement pas à pas en regard du ou des postes d'embrochement, chacune des plaques présentant au moins une empreinte (1a).

8. Machine selon la revendication 1, caractérisée en ce que les piques sont stockées dans un magasin équipé d'un système de sélection apte à distribuer unitairement une pique en vue de son positionnement dans un berceau d'appui horizontal (13) situé entre les deux ensembles.

9. Machine selon la revendication 6, caractérisée en ce que les organes d'éjection sont constitués par un fer profilé (21) logé dans le fond de l'empreinte avec capacité de déplacement en hauteur, ledit fer coopérant, à la sortie du poste d'embrochement, avec un organe (23) apte à assurer son soulèvement pour assurer l'éjection concomitante de la brochette.

10. Machine selon la revendication 7, caractérisée en ce que les plaques (1) sont accouplées à des tambours d'entrainement (3) (4) en constituant une chaine de transfert sans fin.

## Claims

1. Machine for the automatic production of kebabs comprising support means (1) having recesses (1a) suitable for containing ingredients, said means cooperating with at least one skewering system (5) capable of placing a skewer or small spit in each of the recesses (1a) so that, at the same time, it passes through the ingredients in the form of pieces of meat and/or vegetables and/or fruit in order to make up a kebab, characterised in that:
- the skewering system essentially comprises a tube (5), means (6) (7) of inserting a small spit (P) into tube (5), means (15) of obtaining translational motion of the small spit/tube assembly in order to push them into the pieces of meat and/or vegetables placed in the recess, and means of pushing the small spit relative to tube (5) so that it protrudes, means of withdrawing the tube so that only the small spit remains pushed into the pieces of meat and/or vegetables.
- each recess (1a) has a generally rectangular shape enclosing a space capable of being completely filled with ingredients, the dimensions of said recess substantially matching the dimensions of the kebab that is to be produced and each end of recess (1a) communicates with open-ended clearances (1b) (1c) in order to fit the tube (5) that accommodates the small spit (P).

2. Machine as claimed in claim 1, characterised in that the means of inserting the small spit into tube (5) consists of a moving pusher assembly (6) (7) controlled by actuators (10) (11) (12), the means of obtaining translational motion of the small spit/tube assembly consisting of a second moving assembly (15) capable of being moved by the first assembly which has a pin (14) capable of ensuring, in the limit stop position of the two assemblies corresponding to penetration of the small spit/tube assembly into the pieces of meat and/or vegetables from one of the ends of the recess, movement of the small spit relative to tube (5) so that it protrudes at the other end of the recess, said assemblies then being successively returned to their initial position.

3. Machine as claimed in claim 2, characterised in that the first moving assembly comprises two plates (6) (7) that can move relative to a fixed support cradle (13) that holds the small spit (P), plate (6) being linked to rod (10a) of a coaxial actuator (10) and to the shafts (11a) and (12a) of two actuators (11) and (12) of which the rods (11b) and (12b) are linked to plate (7) and pass through plate (6) freely which is slidably mounted on parallel guide rods (8) (9) and is joined to coaxial pin (14) placed in alignment with support cradle (13) so that it is positioned opposite small spit (P); tube (5) is linked to a plate (15) slidably mounted on parallel guide rods (8) (9), the distance (L) between this plate (15) and plate (7) corresponding substantially to the length of a small spit (P).

4. Machine as claimed in claim 2, characterised in that the various means that make up the drive systems are arranged in a horizontal plane corresponding to that of the recesses, the two assemblies (6) (7) and (15) being separated by a distance that substantially equals the length of a small spit.

5. Machine as claimed in claim 1, characterised in that each recess (1a) cooperates, at the time of skewering, with a compression counterform (17) capable of exerting a pressure on the pieces of meat and/or vegetables and/or fruit.

6. Machine as claimed in claim 1, characterised in that each recess has devices for ejecting (21) the kebab.

7. Machine as claimed in claim 1, characterised in that the support means consist of plates (1) linked to each other and controlled by control and transfer devices so that they are successively moved step by step opposite one or more skewering stations, each of the plates having at least one recess (1a).

8. Machine as claimed in claim 1, characterised in that the small spits are stored in a magazine equipped with a selection system capable of dispensing one small spit at a time so that it can be positioned on a horizontal support cradle (13) situated between the two assemblies.

9. Machine as claimed in claim 6, characterised in that the ejection devices consist of a shaped iron (21) mounted in the bottom of the recess and capable of upward vertical movement, said iron cooperating, at the outlet from the skewering station, with a device (23) capable of ensuring it is lifted in order to cause associated ejection of the kebab.

10. Machine as claimed in claim 7, characterised in that the plates (1) are linked to drive drums (3) (4) and form an endless transfer line.

## Patentansprüche

1. Maschine für die automatische Herstellung von Schaschlik mit Haltevorkehrungen (1), die Vertiefungen (1a) für die Aufnahme der Zutaten aufweisen, wobei diese Vorkehrungen mit mindestens einem Aufspießsystem (5) zusammenwirken, das geeignet ist, in jede der Vertiefungen (1a) einen Spieß einzuführen und dabei gleichzeitig die Zutaten in Form von Fleisch- und/oder Gemüse- und/oder Fruchtstücken zu durchbohren, um ein Schaschlik herzustellen, dadurch gekennzeichnet, daß :
das Aufspießsystem im wesentlichen folgende Teile umfaßt: ein Rohr (5); Einrichtungen (6) (7) für die Einführung eines Spießes (P) in das Rohr (5); Einrichtungen (15) für die Querverschiebung des gesamten Spieß- und Rohrsystems zum Eindrücken in die in der Vertiefung liegenden Fleisch- und/oder Gemüsestücke; Einrichtungen zum Eindrücken des Spießes in das Rohr (5) und darüber hinaus; Einrichtungen zum Herausziehen des Rohres, damit nur der Spieß in den Fleisch- und/oder Gemüsestücken eingedrückt bleibt,
jede Vertiefung (1a) eine allgemein rechteckige Form besitzt, die ein Volumen begrenzt, das ganz mit den Zutaten ausgefüllt werden kann, wobei die Abmessungen der Vertiefung ziemlich genau den Abmessungen des gewünschten Schaschlik entsprechen und wobei die Vertiefung (1a) an jedem Ende mit ausführenden Aussparungen (1b) (1c) für die Einführung des den Spieß (P) aufnehmenden Rohres (5) in Verbindung steht.

2. Maschine nach Anspruch 1, dadurch gekennzeichnet, daß die Einrichtungen für die Einführung des Spießes in das Rohr (5) aus einem von Zylindern (10) (11) (12) abhängigen mobilen Schubsystem (6) (7) bestehen, wobei die Einrichtungen für die Querverschiebung der Spieß-/Rohr-Einheit aus einem zweiten mobilen System (15) bestehen, das von dem ersten System verschoben werden kann, welches einen Stift (14) aufweist, der geeignet ist, in Anschlagstellung der beiden Systeme, die ausgehend von einem der Enden der Vertiefungen dem Eindrücken der Spieß-/Rohr-Einheit in die Fleisch- und/oder Gemüsestücke entspricht, die Verschiebung des Spießes gegenüber dem Rohr (5) bis zum Herausragen aus dem anderen Ende der Vertiefung zu gewährleisten, wobei diese Systeme dann wieder nacheinander zur Ausgangsposition zurückgeführt werden.

3. Maschine nach Anspruch 2, dadurch gekennzeichnet, daß das erste mobile System zwei Platten (6) (7) umfaßt, die gegenüber einem den Spieß (P) aufnehmenden ortsfesten Auflager (13) verschiebbar sind, wobei die Platte (6) an die Stange (10a) eines koaxialen Zylinders (10) und an die Schäfte (11a) und (12a) von zwei Zylindern (11) und (12) angekuppelt ist, deren Stangen (11b) und (12b) an die Platte (7) angekuppelt sind und die Platte (6) unbehindert durchqueren, die gleitfähig an parallelen Führungsstangen (8) (9) angebracht und fest mit dem in einer Linie mit dem Auflager (13) angeordneten koaxialen Stift (14) verbunden ist, um gegenüber dem Spieß (P) zu liegen zu kommen; das Rohr (5) ist an eine Platte (15) angekuppelt, die den parallelen Führungsstangen (8) (9) entlang frei gleitfähig angebracht ist, wobei diese Platte (15) von der Platte (7) um eine Länge (L) entfernt ist, die ziemlich genau der Länge eines Spießes (P) entspricht.

4. Maschine nach Anspruch 2, dadurch gekennzeichnet, daß die verschiedenen konstitutiven Einrichtungen der Antriebssysteme in einer derjenigen der Vertiefungen entsprechenden horizontalen Ebene angeordnet sind, wobei die beiden Systeme (6) (7) und (15) durch einen Abstand voneinander getrennt sind, der ziemlich genau der Länge eines Spießes entspricht.

5. Maschine nach Anspruch 1, dadurch gekennzeichnet, daß jede Vertiefung (1a) im Moment des Aufspießens mit einer Abstützgegenform (17) zusammenwirkt, die geeignet ist, auf die Fleisch- und/oder Gemüse- und/oder Fruchtstücke eine Druckkraft auszuüben.

6. Maschine nach Anspruch 1, dadurch gekennzeichnet, daß jede Vertiefung Organe (21) zum Auswerfen des Schaschliks aufweist.

7. Maschine nach Anspruch 1, dadurch gekennzeichnet, daß die tragenden Einrichtungen aus Platten (1) bestehen, die miteinander verkuppelt und von Steuer- und Transferorganen abhängig sind, um schrittweise nacheinander gegenüber die Aufspießstation(en) geführt zu werden, wobei jede der Platten mindestens eine Vertiefung (1a) aufweist.

8. Maschine nach Anspruch 1, dadurch gekennzeichnet, daß die Spieße in einem Magazin aufbewahrt werden, das mit einem Selektionssystem ausgestattet ist, das einen Spieß zwecks Positionierung in einem horizontalen Auflager (13) zwischen den beiden Systemen einzeln ausgeben kann.

9. Maschine nach Anspruch 6, dadurch gekennzeichnet, daß die Auswurforgane aus einem Profileisen (21) bestehen, das höhenverschiebbar im Boden der Vertiefung sitzt, wobei das Eisen am Ausgang der Aufspießstation mit einem Organ (23) zusammenwirkt, das geeignet ist, es so anzuheben, um das gleichzeitige Auswerfen des Schaschliks zu gewährleisten.

10. Maschine nach Anspruch 7, dadurch gekennzeichnet, daß die Platten (1) an Antriebstrommeln (3) (4) angekuppelt sind und dabei eine Endlostransferstraße bilden.
